# EUROPÄISCHE PATENTSCHRIFT

(11) **EP 1 366 401 B1**
(45) Veröffentlichungstag und Bekanntmachung des Hinweises auf die Patenterteilung: **08.06.2005**
(21) Anmeldenummer: 02722156.3
(22) Anmeldetag: 28.02.2002
(51) Int. Cl.: G05D 1/02, A47L 11/40

(54) **BODENBEARBEITUNGSGERÄT INSBESONDERE BODENREINIGUNGSGERÄT**
FLOOR TREATING DEVICE, ESPECIALLY FLOOR CLEANING DEVICE
APPAREIL DE TRAITEMENT DE PLANCHERS, EN PARTICULIER APPAREIL A RECURER LES PARQUETS

(30) Priorität: 07.03.2001 DE 10110905
(43) Veröffentlichungstag der Anmeldung: 03.12.2003
(73) Patentinhaber: Alfred Kärcher GmbH & Co. KG, 71364 Winnenden (DE)
(72) Erfinder: DIEHL, Ralph, 73666 Baltmannsweiler (DE); JANZEN, Jacob, 71522 Backnang (DE); KEPPLER, Joachim, 71364 Winnenden (DE)
(74) Vertreter: Karrais, Martin
(86) Internationale Anmeldenummer: PCT/EP2002/002126
(87) Internationale Veröffentlichungsnummer: WO 2002/071175

(56) Entgegenhaltungen:
- EP-A- 0 628 239
- EP-A- 0 803 224
- US-A- 4 635 982
- US-A- 5 012 886

## Beschreibung

Die Erfindung betrifft ein selbstfahrendes und selbstlenkendes Bodenbearbeitungsgerät, insbesondere Bodenreinigungsgerät, mit einem Fahrwerk, einer elektrischen Antriebseinheit mit am Fahrwerk gelagerten Antriebsrädern, und mit einem Tastelement, das relativ zum Fahrwerk um eine vertikale Drehachse drehbar und parallel zu einer Hauptbewegungsrichtung des Bodenbearbeitungsgeräts verschiebbar gelagert ist, wobei mittels einer mit der Antriebseinheit gekoppelten Sensoreinheit eine Relativbewegung des Tastelements erkennbar und eine Fahrtrichtungsänderung auslösbar ist, und wobei das Tastelement mittels mindestens eines Federelements bei einer Drehbewegung mit einer im Abstand zur Drehachse auf ihn einwirkenden, senkrecht zur Drehachse ausgerichteten elastischen Rückstellkraft beaufschlagbar ist.

Selbstfahrende und selbstienkende Bodenbearbeitungsgeräte sind aus der WO 94/08280 sowie der DE 17 03 830 C3 bekannt. Mit ihrer Hilfe kann ohne den Einsatz einer das Bearbeitungsgerät lenkenden Bedienungsperson eine Bodenfläche bearbeitet, insbesondere gereinigt werden. Trifft das Bodenbearbeitungsgerät auf ein Hindernis, so führt dies zu einer Relativbewegung zwischen Tastelement und Fahrwerk. Diese Relativbewegung wird von der Sensoreinheit erkannt, die daraufhin der elektrischen Antriebseinheit ein Steuersignal bereitstellt, so daß diese die Fahrtrichtung des Bodenbearbeitungsgeräts zum Umfahren des Hindernisses ändert.

In der EP 0 274 310 B1 wird ein Bodenbearbeitungsgerät beschrieben, bei dem das Fahrwerk von einer zylindrischen Haube umgeben ist, die an einer Tastplatte gehalten ist. Letztere kann relativ zum Fahrwerk um eine senkrechte Drehachse verdreht und parallel zu einer Hauptbewegungsrichtung des Bodenbearbeitungsgeräts verschoben werden. Stößt das Bodenbearbeitungsgerät gegen ein Hindernis, so wird der Stoß über die Haube auf die Tastplatte übertragen, die daraufhin eine Relativbewegung zum Fahrwerk ausführt. An der Tastplatte liegt ein Schaltstößel eines Zweiwegeschalters an, der mittels einer Feder kolinear zur Hauptbewegungsrichtung federbelastet an der Tastplatte anliegt. Bei einem Frontalstoß gegen das Hindernis wird der Schaltstößel entgegen der Wirkung der Federkraft von der Tastplatte nach hinten verschoben zur Änderung der Schaltstellung des Zweiwegeschalters. Stößt das bekannte Bodenbearbeitungsgerät in einem Seitenbereich gegen ein Hindernis, so führt dies zu einer Verdrehung und Verschiebung der Tastplatte, was ebenfalls eine mechanische Betätigung des Zweiwegeschalters zur Folge hat. Weicht das Bodenbearbeitungsgerät aufgrund einer Fahrtrichtungsänderung dem Hindernis aus, so wird über den Schaltstößel von der Feder eine Rückstellkraft auf die Tastplatte ausgeübt. Es hat sich allerdings gezeigt, daß die Tastplatte nach einer Drehbewegung nicht in allen Fällen wieder eine definierte Ausgangsstellung einnimmt.

Aus der EP-A-0 803 224 ist ein selbstfahrendes und selbstlenkendes Bodenreinigungsgerät bekannt, bei dem ein vorderes Gehäuseteil als Tastelement ausgestaltet ist, das relativ zu einem Fahrwerk bewegbar an diesem gelagert ist. Die Lagerung erfolgt mit Hilfe von drei Stützröhrchen, die senkrecht auf einer Bodenplatte des Fahrwerks angeordnet sind und jeweils eine Spannfeder umgeben. Das vordere Gehäuseteil sitzt mit korrespondierenden Stützauslegern auf den Stützröhrchen auf, und die Spannfedern verspannen die Stützausleger des vorderen Gehäuseteils mit der Bodenplatte. Stößt das Bodenreinigungsgerät auf ein Hindernis, so bewegt sich das vordere Gehäuseteil relativ zum Fahrwerk, wobei die Stützröhrchen verkippen und die Spannfedern das vordere Gehäuseteil mit einer elastischen Rückstellkraft beaufschlagen.

Aufgabe der vorliegenden Erfindung ist es, ein Bodenbearbeitungsgerät der eingangs genannten Art derart weiterzubilden, daß das Tastelement nach einer Drehbewegung reproduzierbar in eine definierte Ausgangsstellung bezogen auf das Fahrwerk zurückführbar ist.

Diese Aufgabe wird bei einem Bodenbearbeitungsgerät der gattungsgemäßen Art erfindungsgemäß dadurch gelöst, daß das Federelement das Tastelement mit einer im wesentlichen tangential zu einem Kreisbogen ausgerichteten Rückstellkraft beaufschlagt, wobei der Mittelpunkt des Kreisbogens am Drehpunkt des Tastelements oder auf einer Längsachse des Bodenbearbeitungsgeräts in Hauptbewegungsrichtung vor dem Drehpunkt des Tastelements angeordnet ist.

Das Tastelement des erfindungsgemäßen Bodenbearbeitungsgeräts ist mittels mindestens eines Federelements bei einer Drehbewegung mit einer im Abstand zur Drehachse auf ihn einwirkenden senkrecht zur Drehachse ausgerichteten elastischen Rückstellkraft beaufschlagbar. Mit Hilfe des Federelements kann sichergestellt werden, daß das Tastelement nach einer Drehbewegung seine Ausgangsstellung relativ zum Fahrwerk wieder einnimmt, nachdem das Bodenbearbeitungsgerät aufgrund einer vorgenommenen Fahrtrichtungsänderung dem Hindernis ausgewichen ist. Das Federelement greift hierbei im Abstand zur Drehachse des Tastelementes am Tastelement an, so daß vom Federelement ein Drehmoment entgegen der beim Stoß mit dem Hindernis hervorgerufenen Drehbewegung ausgeübt wird. Die vom Federelement ausgeübte Rückstellkraft ist senkrecht zur Drehachse ausgerichtet, so daß ein Verkippen des Tastelements bei der Rückkehr in seine Ausgangsstellung vermieden wird.

Eine verbesserte Stoßempfindlichkeit des Bodenbearbeitungsgeräts wird erfindungsgemäß dadurch erzielt, daß das Federelement das Tastelement mit einer im wesentlichen tangential zu einem Kreisbogen ausgerichteten Rückstellkraft beaufschlagt, wobei der Mittelpunkt des Kreisbogens am Drehpunkt des Tastelements oder auf einer Längsachse des Bodenbearbeitungsgeräts in Hauptbewegungsrichtung vor dem Drehpunkt des Tastelements angeordnet ist. Insbesondere kann der Mittelpunkt des Kreisbogens auf der Längsachse des Bodenbearbeitungsgerätes in Hauptbewegungsrichtung vor dem Bodenbearbeitungsgerät angeordnet sein. Es hat sich gezeigt, daß mittels einer derartigen Orientierung der Rückstellkraft eine besonders zuverlässige Rückführung des Tastelements in seine Ausgangsstellung erzielt werden kann, wobei lediglich verhältnismäßig geringe Rückstellkräfte erforderlich sind, so daß auch bei einem leichten Stoß des Bodenbearbeitungsgeräts mit einem Hindernis eine Relativbewegung des Tastelements erfolgen kann, die durch die Wirkung der Rückstellkraft nur unwesentlich beeinflußt wird.

Um eine Stoßempfindlichkeit des Bodenbearbeitungsgerätes über einen möglichst großen Umfangbereich sicherzustellen, ist es von Vorteil, wenn das Tastelement als das Fahrwerk umgebender Tastring ausgebildet ist. Hierbei hat es sich als günstig erwiesen, wenn der Tastring eine senkrecht zu seiner Drehachse ausgerichtete Ebene definiert, wobei die Rückstellkraft parallel zu dieser Ebene ausgerichtet ist.

Um eine zuverlässige Zentrierung des Tastelements in seiner Ausgangsstellung zu erzielen, ist es günstig, wenn das Bodenbearbeitungsgerät zumindest zwei symmetrisch zu einer Längsachse des Bodenbearbeitungsgeräts angeordnete Federelemente aufweist. Dadurch kann unabhängig von einer Stoßrichtung eine praktisch gleichbleibende Stoßempfindlichkeit sichergestellt werden, wobei unabhängig von der sich jeweils einstellenden Drehrichtung des Tastelements dieses zuverlässig in seine Ausgangsstellung zurückgeführt wird, wenn sich das Bodenbearbeitungsgerät nach erfolgter Fahrtrichtungsänderung vom Hindernis entfernt.

Bei der Ausgestaltung des Tastelements in Form eines Tastrings ist es günstig, wenn die beiden Federelemente in einer gemeinsamen Ebene parallel zu der durch den Tastring definierten Ebene angeordnet sind.

Als Federelemente können beispielsweise zwischen Tastelement und Fahrwerk eingespannte Spannfedern zum Einsatz kommen. Es hat sich aber gezeigt, daß sich eine besonders zuverlässige Betriebsweise durch den Einsatz von Druckfedern sicherstellen läßt.

Bei einer besonders bevorzugten Ausführungsform ist vorgesehen, daß dem Tastelement ein Anschlag zugeordnet ist, gegen den das Tastelement elastisch vorgespannt ist. Mittels des Anschlags kann dem Tastelement eine definierte Ausgangsstellung vorgegeben werden.

Außerdem kann durch den Anschlag sichergestellt werden, daß ein Stoß von hinten in Hauptbewegungsrichtung des Bodenbearbeitungsgeräts keine Relativverschiebung des Tastelements zur Folge hat, so daß das Bodenbearbeitungsgerät bei einem Stoß von hinten keine Fahrtrichtungsänderung durchführt, sondern seine ursprüngliche Fahrtrichtung beibehält.

Von besonderem Vorteil ist es, wenn der Anschlag derart ausgebildet ist, daß ein Stoß gegen das Bodenbearbeitungsgerät in einem Bereich vor einer gemeinsamen Drehachse der beiden Antriebsräder zu einer Relativverschiebung des Tastelements bezogen auf das Fahrwerk führt, daß aber ein Stoß gegen das Bodenbearbeitungsgerät in einem Bereich hinter der gemeinsamen Drehachse der Antriebsräder aufgrund des Anliegens des Tastelements am Anschlag keine Relativbewegung des Tastelements zur Folge hat.

Die elastische Vorspannung des Tastelements in Richtung auf den Anschlag kann mittels der voranstehend genannten Federelemente erfolgen, die auch bei einer Drehbewegung wirksam sind. Alternativ und/oder ergänzend kann für eine besonders zuverlässige Zentrierung des Tastelements an der durch den Anschlag definierten Ausgangsstellung der Einsatz eines weiteren Federelementes vorgesehen sein, das das Tastelement mit einer Federkraft in Richtung auf den Anschlag beaufschlagt. Hierbei ist es von Vorteil, wenn das weitere Federelement parallel zur Längsachse des Bodenbearbeitungsgeräts ausgerichtet ist.

Bei einer Ausgestaltung des Tastelements in Form eines das Fahrwerk umgebenden Tastrings ist es günstig, wenn das weitere Federelement das Tastelement mit einer parallel zu der durch den Tastring definierten Ebene ausgerichteten Federkraft beaufschlagt. Hierbei ist es besonders günstig, wenn das weitere Federelement als parallel zu der durch den Tastring definierten Ebene angeordnete Druckfeder ausgebildet ist.

Bei einer besonders bevorzugten Ausführungsform ist vorgesehen, daß das weitere Federelement und die den Tastring bei einer Drehbewegung mit einer Rückstellkraft beaufschlagenden Federelemente in einer gemeinsamen Ebene angeordnet sind, denn dies ermöglicht eine zuverlässige Ausrichtung des Tastelementes in seiner Ausgangsstellung.

Eine mechanisch besonders belastbare Halterung des Tastelements am Fahrwerk kann dadurch erzielt werden, daß das Tastelement über eine Führungsmechanik mit dem Fahrwerk gekoppelt ist, wobei die Führungsmechanik eine Führungskulisse sowie einen in die Führungskulisse eintauchenden Führungsstift umfaßt. Besonders günstig ist es, wenn die Führungsmechanik den Anschlag ausbildet. So kann beispielsweise vorgesehen sein, daß eine Anlagefläche des Führungsstiftes, mit dem dieser an die Führungskulisse anlegbar ist, den Anschlag ausbildet.

Von Vorteil ist es, wenn die Führungskulisse schräg zueinander ausgerichtete Gleitflächen aufweist, an die der Führungsstift bei einer Relativbewegung des Tastelements anlegbar ist. Durch die Ausrichtung der Gleitflächen relativ zueinander kann die Stoßempfindlichkeit des Bodenbearbeitungsgeräts vorbestimmt werden. Erfolgt der Stoß auf das Bodenbearbeitungsgerät in einer derartigen Richtung, daß sich der Führungsstift von den Gleitflächen entfernt, so führt dies zu einer Relativbewegung des Tastelements, die von der Sensoreinheit erfaßt werden kann. Erfolgt der Stoß jedoch in einer derartigen Richtung, daß der Führungsstift gegen eine der Gleitflächen gedrückt wird, so kann das Tastelement sich allenfalls derart bewegen, daß der Führungsstift an der Führungswand entlang gleitet, wobei die dabei auftretende Reibungskraft die Relativbewegung stark einschränkt.

Um in einem in Hauptbewegungsrichtung vorderen Bereich des Bodenbearbeitungsgeräts eine gleichbleibende Stoßempfindlichkeit sicherzustellen, ist es von Vorteil, wenn die Gleitflächen spiegelbildlich zur Längsachse des Bodenbearbeitungsgeräts ausgerichtet sind. Die schräg zur Längsachse ausgerichteten Gleitflächen definieren einen Öffnungsbereich der Führungskulisse, wobei das Tastelement besonders empfindlich reagiert auf einen in diesen Öffnungsbereich gerichteten Stoß des Bodenbearbeitungsgeräts.

Vorzugsweise sind die Gleitflächen in einem Winkel von ca. 40° bis etwa 80° zueinander ausgerichtet. Insbesondere ein Winkel von etwa 60° hat sich für den Betrieb des Bodenreinigungsgeräts als besonders günstig erwiesen.

Bevorzugt ist die Führungskulisse am Tastelement gehalten und der Führungsstift ist am Fahrwerk festgelegt.

Bei einer besonders bevorzugten Ausführungsform des erfindungsgemäßen Bodenbearbeitungsgeräts ist vorgesehen, daß das Tastelement schwimmend am Fahrwerk gelagert ist, denn dies ermöglicht eine besonders hohe Stoßempfindlichkeit. Hierbei kann vorgesehen sein, daß das Tastelement mittels als Druckfedern ausgestalteter Haltefedern am Fahrwerk gehalten ist. Von besonderem Vorteil ist es, wenn die Funktion der Haltefedern von den voranstehend erläuterten Federelementen übernommen wird, so daß separate Haltefedern entfallen können. Die Halterung des Tastelements erfolgt vielmehr bevorzugt mittels der bei einer Drehbewegung eine elastische Rückstellkraft auf das Tastelement ausübenden Federelemente und gegebenenfalls des weiteren Federelementes, das das Tastelement gegen den Anschlag drückt.

Um die Handhabung des Bodenbearbeitungsgeräts zu vereinfachen, ist es günstig, wenn das Tastelement als das Fahrwerk umgebender Tastring ausgebildet ist, der das Fahrwerk untergreift. Dadurch kann das Bodenbearbeitungsgerät am Tastring angehoben werden, ohne daß dies eine Beschädigung des vorzugsweise schwimmend gelagerten Tastelements zur Folge hat.

Wie bereits erläutert, wird die bei einem Stoß des Bodenbearbeitungsgeräts auf ein Hindernis erfolgende Relativbewegung des Tastelements von der Sensoreinheit erfaßt. Hierbei ist es von Vorteil, wenn die Sensoreinheit berührungslos arbeitende Sensorelemente aufweist, da dadurch die Sensorelemente keiner mechanischen Abnützung unterliegen.

Vorzugsweise weist die Sensoreinheit mindestens einen Magneten sowie einen magnetfeldempfindlichen Sensor auf.

Als besonders günstig hat es sich erwiesen, wenn die Sensoreinheit zumindest zwei Magnete aufweist, denen jeweils ein Hallsensor zugeordnet ist.

Die Sensorelemente der Sensoreinheit können unmittelbar am Tastelement und dem Fahrwerk positioniert sein. Um jedoch die Gefahr einer mechanischen Beeinträchtigung der Sensorelemente zu vermindern, ist es günstig, wenn das Bodenbearbeitungsgerät einen das Fahrwerk übergreifenden Deckel umfaßt, dessen der zu reinigenden Bodenfläche zugewandter Außenrand starr mit dem als Tastring ausgebildeten Tastelement verbunden ist, und wenn die Sensoreinheit einander zugeordnete Hallsensoren und Magnete umfaßt, die am Fahrwerk bzw. an der dem Fahrwerk zugewandten Innenseite des Deckels angeordnet sind. Die mechanische Halterung des Deckels erfolgt hierbei über den vorzugsweise schwimmend gelagerten Tastring, und aufgrund der starren Verbindung zwischen Tastring und Deckel wird jede Relativbewegung des Tastrings auf den Deckel übertragen und dadurch von den vorzugsweise am Fahrwerk positionierten Hallsensoren sicher erfaßt. Die Hallsensoren stehen mit der Antriebseinheit in elektrischer Verbindung und stellen ein elektrisches Steuersignal bereit, so daß bei einer Relativbewegung des Tastrings und des Deckels eine Fahrtrichtungsänderung bewirkt werden kann. Die Festlegung der Hallsensoren, der Antriebseinheit und der Spannungsversorgung am Fahrwerk ermöglicht eine ortsfeste Anordnung der jeweiligen elektrischen Leitungen am Fahrwerk und damit eine zuverlässige elektrische Verbindung.

Die nachfolgende Beschreibung einer bevorzugten Ausführungsform dient im Zusammenhang mit der Zeichnung der näheren Erläuterung. Es zeigen:

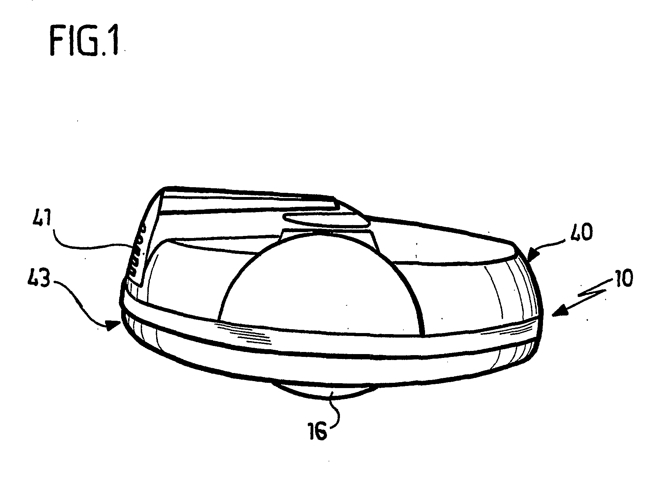

- Figur 1:: eine schaubildliche Darstellung eines Bodenreinigungsgeräts;
- Figur 2:: eine Draufsicht auf das Bodenreinigungsgerät bei abgenommenem Deckel und

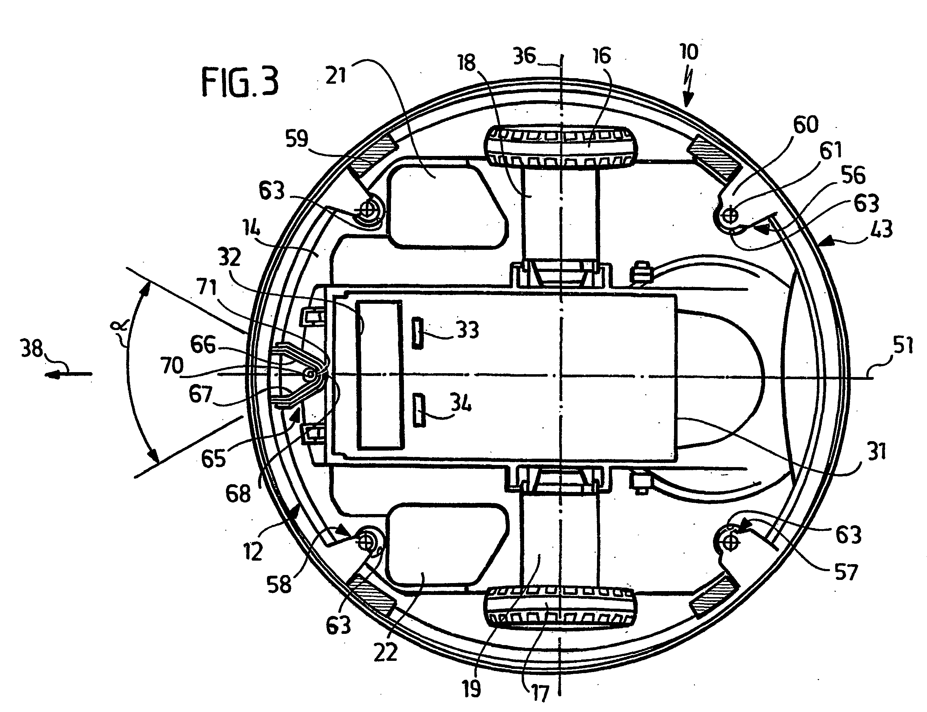

- Figur 3:: eine Unteransicht des Bodenreinigungsgeräts.

In der Zeichnung ist ein insgesamt mit dem Bezugszeichen 10 belegtes selbstfahrendes und selbstlenkendes Bodenreinigungsgerät schematisch dargestellt. Es umfaßt ein Fahrwerk 12, das eine Tragplatte 14 ausbildet und an dem zwei Antriebsräder 16, 17 drehbar gelagert sind. Den Antriebsrädern 16, 17 ist jeweils ein elektrischer Antriebsmotor 18 bzw. 19 zugeordnet. Die Antriebsmotoren 18, 19 sind an der Unterseite der Tragplatte 14 gehalten, und stehen mit einer auf der Oberseite der Tragplatte 14 positionierten Antriebselektronik 20 sowie jeweils einer wiederaufladbaren Batterie 21 bzw. 22 in elektrischer Verbindung.

Die Tragplatte 14 nimmt auf ihrer Oberseite zwei ortsfest gehaltene Hallsensoren 24 und 25 auf, die über Signalleitungen 26 bzw. 27 mit der Antriebselektronik 20 elektrisch gekoppelt sind.

Die Tragplatte 14 trägt ein Saugaggregat 29, das über einen vom Fahrwerk 12 sowie einer lösbar verbindbar an diesem gehaltenen Bodenplatte 31 definierten Saugkanal mit einer die Bodenplatte 31 durchgreifenden Saugöffnung 32 in Strömungsverbindung steht. Der Saugöffnung 32 benachbart sind an der Bodenplatte 31 zwei Stützrollen 33, 34 frei drehbar gelagert, deren Drehachse parallel zur gemeinsamen Drehachse 36 der Antriebsräder 18, 19 ausgerichtet ist.

Mittels der Antriebsräder 16, 17 und der Stützrollen 33, 34 kann das Bodenreinigungsgerät 10 in der durch den Pfeil 38 symbolisierten Hauptbewegungsrichtung nach vorne und entgegen dieser Richtung 38 nach hinten verfahren werden. Hierbei kann unter der Wirkung des Saugaggregats 39 Schmutz von der zu reinigenden Bodenfläche abgesaugt werden. Ergänzend kann eine in der Zeichnung nicht dargestellte Bürstenwalze zum Einsatz kommen, die der Saugöffnung 32 benachbart angeordnet werden kann. Durch einseitige Ansteuerung einer der beiden Antriebsmotoren 18 oder 19 kann eine Fahrtrichtungsänderung des Bodenreinigungsgeräts 10 erzielt werden.

Das Fahrwerk 12 wird von einem glockenförmigen Gehäuse 40 überfangen, das in seinem rückwärtigen Bereich Auslaßöffnungen 41 aufweist zur Abgabe der vom Saugaggregat 29 über die Saugöffnung 32 angesaugten Arbeitsluft, nachdem diese durch ein innerhalb des Saugkanals angeordnetes Schmutzfilter (nicht dargestellt) hindurchgeführt wurde. Das Gehäuse 40 stützt sich an einem das Fahrwerk 12 allseitig umgebenden, kreisringförmigen Tastring 43 ab, der ebenso wie das Fahrwerk 12 und das Gehäuse 40 aus einem Kunststoffmaterial gefertigt ist und der schwimmend am Fahrwerk 12 gelagert ist.

Die Lagerung des Tastrings 43 am Fahrwerk 12 erfolgt mittels zweier hinterer Druckfedern 45, 46 und einer vorderen Druckfeder 47. Die Druckfedern 45, 46 und 47 sind in einer gemeinsamen Ebene parallel zu der durch den Tastring 43 definierten Ebene ausgerichtet und jeweils zwischen am Tastring 43 und dem Fahrwerk 12 fixierten Stützzapfen 48 bzw. 49 eingespannt. Die beiden hinteren Druckfedern 45 und 46 sind bezogen auf die Hauptbewegungsrichtung 38 hinter der gemeinsamen Drehachse 36 der Antriebsräder 18, 19 positioniert. Sie sind spiegelbildlich zu einer parallel zur Hauptbewegungsrichtung 38 ausgerichteten Längsachse 51 angeordnet und verlaufen jeweils tangential zu einem gemeinsamen Kreisbogen 52, dessen Mittelpunkt 53 in Hauptbewegungsrichtung 38 vor dem Bodenreinigungsgerät 10 auf der Längsachse 51 positioniert ist.

Die vordere Druckfeder 47 ist vor der gemeinsamen Drehachse 36 angeordnet und parallel zur Längsachse 51 ausgerichtet.

In Umfangsrichtung gleichmäßig verteilt weist der Tastring 43 insgesamt vier Stützhaken 56, 57, 58, 59 auf, die jeweils ungefähr L-förmig ausgestaltet sind und einen radial nach innen gerichteten ersten Schenkel 60 und einen vertikal nach oben gerichteten, im wesentlichen in Form eines Zapfens ausgebildeten zweiten Schenkel 61 umfassen. Mit ihren zweiten Schenkeln 61 durchgreifen die Stützhaken 56, 57, 58, 59 jeweils einen Durchbruch 63 der Tragplatte 14. Die Querschnittsfläche des Durchbruchs 63 ist hierbei erheblich größer gewählt als die Querschnittsfläche des jeweils durchgreifenden zweiten Schenkels 61.

Die der Bodenfläche abgewandten Oberseiten der ersten Schenkel 60 bilden jeweils eine Stützfläche, mit der der Tastring 43 das Fahrwerk 12 untergreift und auf der das Fahrwerk 12 beim Anheben des Bodenreinigungsgerätes 10 abgesetzt werden kann.

In seinem bezogen auf die Hauptbewegungsrichtung 38 vorderen Bereich ist an die Tragplatte 14 unterhalb der vorderen Druckfeder 47 eine gabelförmige Kulisse 65 angeformt, die zwei spiegelsymmetrisch zur Längsachse 51 ausgerichtete Gleitflächen 66 und 67 ausbildet, die in einem Winkel α von etwa 60° zueinander ausgerichtet sind und in einer Kulissenspitze 68 aufeinandertreffen.

Die gabelförmige Kulisse 65 wird von einem von der Tragplatte 16 vertikal nach unten abstehenden zylindrischen Führungsstift 70 durchgriffen. Da der Tastring 43 von der parallel zur Längsachse 51 ausgerichteten vorderen Druckfeder 47 und zusätzlich von den schräg zur Längsachse 51 ausgerichteten hinteren Druckfedern 45 und 46 mit einer Federkraft in Hauptbewegungsrichtung 38 beaufschlagt ist, wird der Tastring 43 über die an ihm festgelegte Kulisse 45 so weit nach vorne in Hauptbewegungsrichtung 38 verschoben, daß die Kulissenspitze 68 am Führungsstift 70 anliegt. Der Führungsstift 70 bildet somit mit seiner der Kulisse 65 zugewandten Mantelfläche 71 einen Anschlag für den Tastring 43.

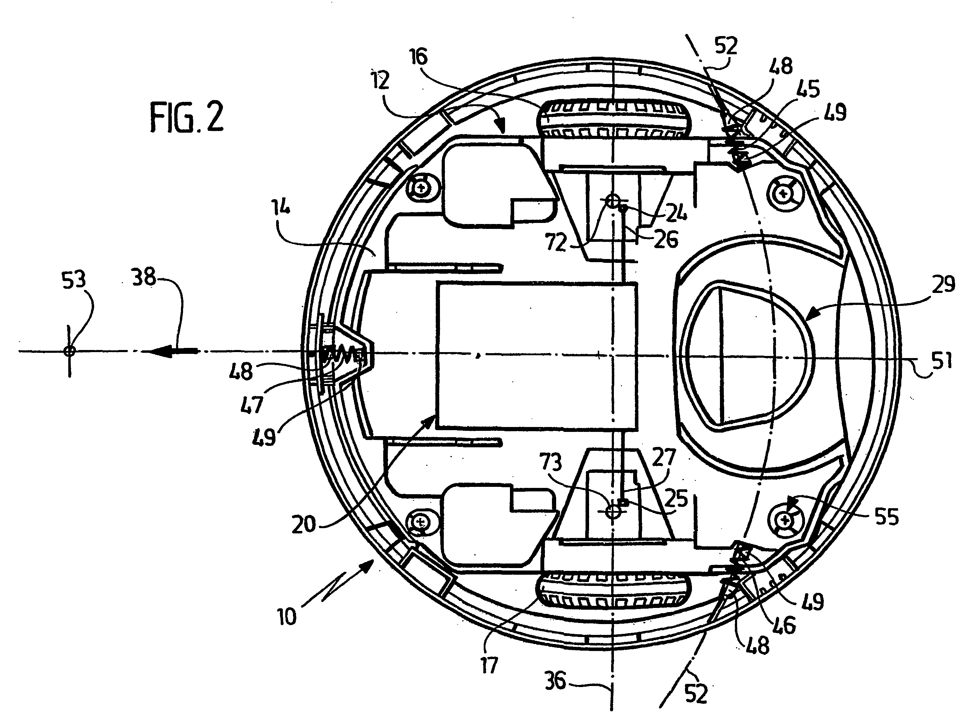

Wie bereits erläutert, übergreift das Gehäuse 40 das Fahrwerk 12 und ist am Tastring 43 festgelegt. Den Hallsensoren 24 und 25 benachbart sind an der Innenseite des Gehäuses zwei Permanentmagnete gehalten, deren Position relativ zu den Hallsensoren 24 und 25 in Figur 2 durch die Positionen 72 und 73 veranschaulicht ist. Wie aus Figur 2 deutlich wird, sind die Permanentmagnete in Höhe der gemeinsamen Drehachse 36 der Antriebsräder 16 und 17 angeordnet, während die jeweils zugeordneten Hallsensoren 24 bzw. 25 nach hinten und radial nach innen versetzt angeordnet sind.

Stößt das Bodenreinigungsgerät 10 bei einer Fahrt in Hauptbewegungsrichtung 38 gegen ein Hindernis, so hat dies aufgrund der schwimmenden Lagerung des Tastrings 43 eine Relativbewegung zwischen Tastring 43 und Fahrwerk 12 zur Folge. Die Bewegung des Tastrings 43 wird über das Gehäuse 40 auf die daran gehaltenen Permanentmagnete übertragen, so daß von den zugeordneten Hallsensoren 24 und 25 aufgrund der durch die Bewegung der Permanentmagnete erfolgenden Magnetfeldänderung eine Relativbewegung des Tastrings 43 festgestellt wird. Über die Signalleitungen 26 und 27 geben die Hallsensoren 24 und 25 ein elektrisches Signal an die Antriebselektronik 20, die daraufhin zunächst eine Rückwärtsfahrt des Bodenreinigungsgeräts 10 und anschließend eine Vorwärtsfahrt mit zunächst ungleichmäßiger Ansteuerung der Antriebsmotoren 18 und 19 hervorruft zur Erzielung einer Fahrtrichtungsänderung, um das Hindernis zu umfahren.

Trifft das Bodenreinigungsgerät 10 in Hauptbewegungsrichtung 38 frontal auf ein Hindernis, so führt dies lediglich zu einer Verschiebung des Tastrings 43 entgegen der Hauptbewegungsrichtung 38. Entfernt sich das Bodenreinigungsgerät 10 anschließend wieder von dem Hindernis, so wird der Tastring 43 aufgrund der auf ihn ausgeübten Federkräfte wieder nach vorne verschoben, so daß die Kulissenspitze 68 wieder am Führungszapfen 70 anliegt und damit der Tastring 43 seine Ausgangsposition einnimmt.

Erfaßt das Bodenreinigungsgerät 10 bei einer Fahrt in Hauptbewegungsrichtung 38 in einem seitlichen Bereich ein Hindernis, so erfährt der Tastring 43 zusätzlich zu einer Verschiebebewegung entgegen der Hauptbewegungsrichtung 38 eine überlagerte Drehbewegung um eine vertikale, parallel zum Führungsstift 70 ausgerichtete Drehachse. Bei anschließender Entfernung vom Hindernis wird der Tastring 43 unter der Wirkung der Druckfedern 45, 46 und 47 zuverlässig wieder in seine Ausgangsstellung verschoben, in der die Kulissenspitze 68 am Führungsstift 70 anliegt.

Erfährt das Bodenreinigungsgerät 10 einen Stoß von hinten in Hauptbewegungsrichtung 38, so erfährt der Tastring 43 keine Relativbewegung, da die Kulisse 65 am Führungsstift 70 anliegt. Ein Stoß von hinten hat folglich keine Fahrtrichtungsänderung zur Folge.

## Patentansprüche

1. Selbstfahrendes und selbstlenkendes Bodenbearbeitungsgerät, insbesondere Bodenreinigungsgerät, mit einem Fahrwerk, einer elektrischen Antriebseinheit mit am Fahrwerk gelagerten Antriebsrädern, und mit einem Tastelement, das relativ zum Fahrwerk um eine vertikale Drehachse drehbar und parallel zu einer Hauptbewegungsrichtung des Bodenbearbeitungsgeräts verschiebbar gelagert ist, wobei mittels einer mit der Antriebseinheit gekoppelten Sensoreinheit eine Relativbewegung des Tastelements erkennbar und eine Fahrtrichtungsänderung auslösbar ist, und wobei das Tastelement mittels mindestens eines Federelements bei einer Drehbewegung mit einer im Abstand zur Drehachse auf ihn einwirkenden, senkrecht zur Drehachse ausgerichteten elastischen Rückstellkraft beaufschlagbar ist , **dadurch gekennzeichnet, daß** das Federelement (45, 46) das Tastelement (43) mit einer im wesentlichen tangential zu einem Kreisbogen (52) ausgerichteten Rückstellkraft beaufschlagt, wobei der Mittelpunkt (53) des Kreisbogens (52) am Drehpunkt des Tastelements (43) oder auf einer Längsachse (51) des Bodenbearbeitungsgeräts (10) in Hauptbewegungsrichtung (38) vor dem Drehpunkt des Tastelements (43) angeordnet ist.

2. Bodenbearbeitungsgerät nach Anspruch 1, **dadurch gekennzeichnet, daß** das Tastelement als das Fahrwerk (12) umgebender Tastring (43) ausgebildet ist, der eine senkrecht zur Drehachse ausgerichtete Ebene definiert, wobei die Rückstellkraft parallel zu dieser Ebene ausgerichtet ist.

3. Bodenbearbeitungsgerät nach Anspruch 1 oder 2, **dadurch gekennzeichnet, daß** das Bodenbearbeitungsgerät (10) zumindest zwei symmetrisch zu einer Längsachse (51) des Bodenbearbeitungsgeräts angeordnete Federelemente (45, 46) aufweist.

4. Bodenbearbeitungsgerät nach Anspruch 3, **dadurch gekennzeichnet, daß** das Tastelement als das Fahrwerk (12) umgebender Tastring (43) ausgebildet ist und die beiden Federelemente (45, 46) in einer gemeinsamen Ebene parallel zu der durch den Tastring (43) definierten Ebene angeordnet sind.

5. Bodenbearbeitungsgerät nach einem der voranstehenden Ansprüche, **dadurch gekennzeichnet, daß** das mindestens eine Federelement (45, 46) als Druckfeder ausgebildet ist.

6. Bodenbearbeitungsgerät nach einem der voranstehenden Ansprüche, **dadurch gekennzeichnet, daß** dem Tastelement (43) ein Anschlag (71) zugeordnet ist, gegen den das Tastelement (43) elastisch vorgespannt ist.

7. Bodenbearbeitungsgerät nach Anspruch 6, **dadurch gekennzeichnet, daß** das Tastelement (43) mittels eines weiteren Federelementes (47) mit einer Federkraft in Richtung auf den Anschlag (71) beaufschlagbar ist.

8. Bodenbearbeitungsgerät nach Anspruch 6 oder 7, **dadurch gekennzeichnet, daß** das Tastelement als das Fahrwerk (12) umgebender Tastring (43) ausgebildet ist und das weitere Federelement (47) den Tastring (43) mit einer parallel zu der durch den Tastring (43) definierten Ebene ausgerichteten Federkraft beaufschlagt.

9. Bodenbearbeitungsgerät nach Anspruch 8, **dadurch gekennzeichnet, daß** das weitere Federelement (47) als parallel zu der durch den Tastring (43) definierten Ebene angeordnete Druckfeder ausgebildet ist.

10. Bodenbearbeitungsgerät nach einem der Ansprüche 7 bis 9, **dadurch gekennzeichnet, daß** das weitere Federelement (47) und das mindestens eine den Tastring (43) bei einer Drehbewegung mit einer elastischen Rückstellkraft beaufschlagende Federelement (45, 46) in einer gemeinsamen Ebene angeordnet sind.

11. Bodenbearbeitungsgerät nach einem der Ansprüche 6 bis 10, **dadurch gekennzeichnet, daß** das Tastelement (43) über eine Führungsmechanik mit dem Fahrwerk (12) gekoppelt ist, wobei die Führungsmechanik den Anschlag (71) ausbildet und eine Führungskulisse (65) sowie einen in die Führungskulisse (65) eintauchenden Führungsstift (70) umfaßt.

12. Bodenbearbeitungsgerät nach Anspruch 11, **dadurch gekennzeichnet, daß** die Führungskulisse (65) schräg zueinander ausgerichtete Gleitflächen (66, 67) aufweist, an die der Führungsstift (70) anlegbar ist.

13. Bodenbearbeitungsgerät nach Anspruch 12, **dadurch gekennzeichnet, daß** die Gleitflächen (66, 67) spiegelbildlich zur Längsachse (51) des Bodenbearbeitungsgeräts (10) angeordnet sind.

14. Bodenbearbeitungsgerät nach Anspruch 12 oder 13, **dadurch gekennzeichnet, daß** die Gleitflächen (66, 67) in einem Winkel (α) von ca. 40° bis etwa 80° zueinander ausgerichtet sind.

15. Bodenbearbeitungsgerät nach einem der Ansprüche 11 bis 14, **dadurch gekennzeichnet, daß** die Führungskulisse (65) am Tastelement (43) gehalten und der Führungsstift (70) am Fahrwerk (12) festgelegt ist.

16. Bodenbearbeitungsgerät nach einem der voranstehenden Ansprüche, **dadurch gekennzeichnet, daß** das Tastelement (43) schwimmend am Fahrwerk (12) gelagert ist.

17. Bodenbearbeitungsgerät nach Anspruch 16, **dadurch gekennzeichnet, daß** das Tastelement (43) mittels Druckfedern (45, 46, 47) am Fahrwerk (12) gehalten ist.

18. Bodenbearbeitungsgerät nach einem der voranstehenden Ansprüche, **dadurch gekennzeichnet, daß** das Tastelement als das Fahrwerk (12) umgebender Tastring (43) ausgebildet ist, der das Fahrwerk (12) untergreift.

19. Bodenbearbeitungsgerät nach Anspruch 18, **dadurch gekennzeichnet, daß** der Tastring (43) nach innen gerichtete Stützhaken (56, 57, 58, 59) umfaßt, die am Fahrwerk (12) angeordnete Durchbrechungen (63) durchgreifen.

20. Bodenbearbeitungsgerät nach einem der voranstehenden Ansprüche, **dadurch gekennzeichnet, daß** die Sensoreinheit berührungslos arbeitende Sensorelemente (24, 25) aufweist.

21. Bodenbearbeitungsgerät nach einem der voranstehenden Ansprüche, **dadurch gekennzeichnet, daß** die Sensoreinheit mindestens einen Magneten aufweist, dem ein magnetfeldempfindlicher Sensor (24, 25) zugeordnet ist.

22. Bodenbearbeitungsgerät nach einem der voranstehenden Ansprüche, **dadurch gekennzeichnet, daß** die Sensoreinheit zumindest zwei Magnete aufweist, denen jeweils ein Hallsensor (24, 25) zugeordnet ist.

23. Bodenbearbeitungsgerät nach einem der voranstehenden Ansprüche, **dadurch gekennzeichnet, daß** das Bodenbearbeitungsgerät (10) einen das Fahrwerk (12) übergreifenden Dekkel (40) umfaßt, dessen der zu reinigenden Bodenfläche zugewandter Außenrand starr mit dem als das Fahrwerk (12) umgebender Tastring (43) ausgebildeten Tastelement verbunden ist, und daß die Sensoreinheit einander zugeordnete Hallsensoren (24, 25) und Magnete umfaßt, die am Fahrwerk (12) bzw. an der dem Fahrwerk (12) zugewandten Innenseite des Deckels festgelegt sind.

## Claims

1. A self-propelled and self-steering floor treating device, particularly a floor cleaning device, having a chassis, an electrical drive unit with drive wheels mounted on the chassis, and having a feeler element which is mounted such that it is rotatable relative to the chassis about a vertical axis of rotation and displaceable parallel to a main direction of movement of the floor treating device, it being possible to detect a relative movement of the feeler element and to trigger a change in the direction of travel by means of a sensor unit coupled to a drive unit and it being possible for the feeler element to be acted upon by an elastic resetting force exerted by at least one spring element in the event of a rotational movement, said resetting force acting on the feeler element at a spacing from the axis of rotation and being directed perpendicularly to the axis of rotation, **characterised in that** the spring element (45, 46) exerts a resetting force on the feeler element (43) which is directed substantially tangentially to an arc (52), the centre point (53) of the arc (52) being arranged at the centre of rotation of the feeler element (43) or upstream of the centre of rotation of the feeler element (43) on a longitudinal axis (51) of the floor treating device (10), as seen in the main direction of movement (38).

2. A floor treating device according to Claim 1, **characterised in that** the feeler element is constructed as a feeler ring (43) which surrounds the chassis (25) and defines a plane directed perpendicularly to the axis of rotation, the resetting force being directed parallel to this plane.

3. A floor treating device according to Claim 1 or 2, **characterised in that** the floor treating device (10) has at least two spring elements (45, 46) arranged symmetrically with respect to a longitudinal axis (51) of the floor treating device.

4. A floor treating device according to Claim 3, **characterised in that** the feeler element is constructed as a feeler ring (43) surrounding the chassis (12), and the two spring elements (45, 46) are arranged in a common plane parallel to the plane defined by the feeler ring (43).

5. A floor treating device according to one of the preceding claims, **characterised in that** at least one spring element (45, 46) is constructed as a pressure spring.

6. A floor treating device according to one of the preceding claims, **characterised in that** a stop (71), against which the feeler element (43) is resiliently prestressed, is associated with the feeler element (43).

7. A floor treating device according to Claim 6, **characterised in that** the feeler element (43) may be acted upon by a spring force in the direction of the stop (71), said spring force being exerted by a further spring element (47).

8. A floor treating device according to Claim 6 or 7, **characterised in that** the feeler element is constructed as a feeler ring (43) surrounding the chassis (12) and the further spring element (43) exerts a spring force on the feeler ring (43), said spring force being directed parallel to the plane defined by the feeler ring (43).

9. A floor treating device according to Claim 8, **characterised in that** the further spring element (47) is constructed as a pressure spring arranged parallel to the plane defined by the feeler ring (43).

10. A floor treating device according to one of Claims 7 to 9, **characterised in that** the further spring element (47) and the at least one spring element (45, 46) exerting an elastic resetting force on the feeler ring (43) upon a rotational movement are arranged in a common plane.

11. A floor treating device according to one of Claims 6 to 10, **characterised in that** the feeler element (43) is coupled to the chassis (12) by way of a guide mechanism, the guide mechanism forming the stop (71) and comprising a guide link (65) and also a guide pin (70) dipping into the guide link (65).

12. A floor treating device according to Claim 11, **characterised in that** the guide link (65) has slide faces (66,, 67) which are aligned at an angle to one another and against which the guide pin (70) may be placed.

13. A floor treating device according to Claim 12, **characterised in that** the slide faces (66, 67) are arranged mirror-symmetrically with respect to the longitudinal axis (51) of the floor treating device (10).

14. A floor treating device according to Claim 12 or 13, **characterised in that** the slide faces (66, 67) are aligned at an angle (α) of ca. 40° to approximately 80° with respect to one another.

15. A floor treating device according to one of Claims 11 to 14, **characterised in that** the guide link (65) is held on the feeler element (43) and the guide pin (70) is fixed to the chassis (12).

16. A floor treating device according to one of the preceding claims, **characterised in that** the feeler element (43) is mounted on the chassis (12) in floating manner.

17. A floor treating device according to Claim 16, **characterised in that** the feeler element (43) is held on the chassis (12) by means of pressure springs (45, 46, 47).

18. A floor treating device according to one of the preceding claims, **characterised in that** the feeler element is constructed as a feeler ring (43) which surrounds the chassis (12) and reaches under the chassis (12).

19. A floor treating device according to Claim 18, **characterised in that** the feeler ring (43) comprises inwardly directed supporting hooks (56, 57, 58, 59) which reach through openings (63) arranged in the chassis (12).

20. A floor treating device according to one of the preceding claims, **characterised in that** the sensor unit has sensor elements (24, 25) operating without contact.

21. A floor treating device according to one of the preceding claims, **characterised in that** the sensor unit has at least one magnet with which a sensor (24, 25) which is sensitive to a magnetic field is associated.

22. A floor treating device according to one of the preceding claims, **characterised in that** the sensor unit has at least two magnets with which a respective Hall sensor (24, 25) is associated in each case.

23. A floor treating device according to one of the preceding claims, **characterised in that** the floor treating device (10) comprises a cover (40) which reaches over the chassis (12) and whereof the outer border facing the floor surface to be cleaned is rigidly connected to the feeler element contructed as a feeler ring (43) surrounding the chassis (12), and **in that** the sensor unit comprises mutually associated Hall sensors (24, 25) and magnets which are fixed to the chassis (12) and to the inside of the cover, respectively, which inside faces the chassis (12).

## Revendications

1. Appareil de traitement de sols auto-déplacé et auto-piloté, notamment appareil de nettoyage de sols avec un mécanisme de déplacement, une unité d'entraînement électrique, avec des roues motrices logées au niveau du mécanisme de déplacement et avec un élément palpeur qui est rotatif par rapport au mécanisme de déplacement autour d'un axe de rotation vertical et qui est monté de façon à pouvoir être déplacé parallèlement à une direction principale de déplacement de l'appareil de traitement de sols, un déplacement relatif de l'élément palpeur étant identifiable à l'aide d'une unité de détection accouplée à l'unité d'entraînement et une modification de la direction de déplacement pouvant être provoquée, et l'élément palpeur pouvant être soumis à l'action d'au moins un élément à ressort lors d'un mouvement de rotation, avec une force de rappel élastique agissant sur lui à une certaine distance de l'axe de rotation et étant orientée perpendiculairement à l'axe de rotation, **caractérisé en ce que** l'élément à ressort (45, 46) soumet l'élément palpeur (43) à une force de rappel orientée de façon essentiellement tangentielle à un arc de cercle (52), le point médian (53) de l'arc de cercle (52) étant disposé sur le centre de rotation de l'élément palpeur (43) ou sur un axe longitudinal (51) de l'appareil de traitement de sols (10), dans la direction principale de déplacement (38), en avant du centre de rotation de l'élément palpeur (43).

2. Appareil de traitement de sols selon la revendication 1, **caractérisé en ce que** l'élément palpeur est agencé sous la forme d'une bague palpeuse (43) entourant le mécanisme de déplacement (12), qui définit un plan perpendiculaire à l'axe de rotation, la force de rappel étant dirigée parallèlement audit plan.

3. Appareil de traitements de sols selon la revendication 1 ou 2, **caractérisé en ce que** l'appareil de traitement de sols (10) présente au moins deux éléments à ressort (45, 46) disposés de façon symétrique par rapport à un axe longitudinal (51) de l'appareil de traitement de sols (10).

4. Appareil de traitement de sols selon la revendication 3, **caractérisé en ce que** l'élément palpeur est agencé conçu sous la forme d'une bague palpeuse (43) entourant le mécanisme de déplacement (12), et les deux éléments à ressort (45, 46) sont disposés dans un plan commun, parallèlement au plan défini par la bague palpeuse (43).

5. Appareil de traitement de sols selon l'une quelconque des revendications précédentes, **caractérisé en ce qu'**au moins un élément à ressort (45, 46) est agencé sous la forme d'un ressort de pression.

6. Appareil de traitement de sols selon l'une quelconque des revendications précédentes, **caractérisé en ce qu'**une butée (71), contre laquelle l'élément palpeur (43) est précontraint de façon élastique, est associée à l'élément palpeur (43).

7. Appareil de traitement de sols selon la revendication 6, **caractérisé en ce que** l'élément palpeur (43) peut être soumis à l'action d'un élément à ressort supplémentaire (47), avec une force élastique en direction de la butée (71).

8. Appareil de traitement de sols selon la revendication 6 ou 7, **caractérisé en ce que** l'élément palpeur est agencé sous la forme d'une bague palpeuse (43) entourant le mécanisme de déplacement (12), et l'élément à ressort supplémentaire (47) soumet la bague palpeuse (43) à une force élastique parallèle à un plan défini par la bague palpeuse (43).

9. Appareil de traitement de sols selon la revendication 8, **caractérisé en ce que** l'élément à ressort supplémentaire (47) est agencé sous la forme d'un ressort de pression disposé parallèlement au plan défini par la bague palpeuse (43).

10. Appareil de traitement de sols selon l'une quelconque des revendications 7 à 9, **caractérisé en ce que** l'élément à ressort supplémentaire (47) et au moins un élément à ressort (45, 46) soumettant la bague palpeuse (43) à une force de rappel élastique lors d'un mouvement de rotation sont disposés dans un plan commun.

11. Appareil de traitement de sols selon l'une quelconque des revendications 6 à 10, **caractérisé en ce que** l'élément palpeur (43) est accouplé au mécanisme de déplacement (12) par l'intermédiaire d'un mécanisme de guidage, ledit mécanisme de guidage formant la butée (71) et comprenant une coulisse de guidage (65), ainsi qu'une broche de guidage (70) plongeant dans la coulisse de guidage (65).

12. Appareil de traitement de sols selon la revendication 11, **caractérisé en ce que** la coulisse de guidage (65) présente des surfaces de glissement (66, 67) orientées en oblique l'une par rapport à l'autre, sur lesquelles la broche de guidage (70) peut s'appuyer.

13. Appareil de traitement de sols selon la revendication 12, **caractérisé en ce que** les surfaces de glissement (66, 67) sont disposées symétriquement en miroir par rapport à l'axe longitudinal (51) de l'appareil de traitement de sols (10).

14. Appareil de traitement de sols selon la revendication 12 ou 13, **caractérisé en ce que** les surfaces de glissement (66, 67) sont orientées l'une par rapport à l'autre selon un angle (α) d'environ 40° à environ 80°.

15. Appareil de traitement de sols selon l'une quelconque des revendications 11 à 14, **caractérisé en ce que** la coulisse de guidage (65) est maintenue sur l'élément palpeur, et la broche de guidage (70) est fixée sur le mécanisme de déplacement (12).

16. Appareil de traitement de sols selon l'une quelconque des revendications précédentes, **caractérisé en ce que** l'élément palpeur (43) est monté de façon flottante sur le mécanisme de déplacement (12).

17. Appareil de traitement de sols selon la revendication 16, **caractérisé en ce que** l'élément palpeur (43) est maintenu sur le mécanisme de déplacement (12) par des ressorts de pression (45, 46, 47).

18. Appareil de traitement de sols selon l'une quelconque des revendications précédentes, **caractérisé en ce que** l'élément palpeur est agencé sous la forme d'une bague palpeuse (43) entourant le mécanisme de déplacement (12), qui s'accroche dans le mécanisme de déplacement (12) par le dessous.

19. Appareil de traitement de sols selon la revendication 18, **caractérisé en ce que** la bague palpeuse (43) comprend des crochets d'appui (56, 57, 58, 59) dirigés vers l'intérieur, qui passent au travers de découpes (63) prévues sur le mécanisme de déplacement (12).

20. Appareil de traitement de sols selon l'une quelconque des revendications précédentes, **caractérisé en ce que** l'unité de détection présente des éléments de détection (24, 25) fonctionnant sans contact.

21. Appareil de traitement de sols selon l'une quelconque des revendications précédentes, **caractérisé en ce que** l'unité de détection présente au moins un aimant, qui est associé à un capteur (24, 25) sensible à un champ magnétique.

22. Appareil de traitement de sols selon l'une quelconque des revendications précédentes, **caractérisé en ce que** l'unité de détection présente au moins deux aimants, à chacun desquels est associé un capteur (24, 25) à effet Hall.

23. Appareil de traitement de sols selon l'une quelconque des revendications précédentes, **caractérisé en ce que** l'appareil de traitement de sols (10) comprend un couvercle (40) s'accrochant sur le mécanisme de déplacement (12), dont le bord extérieur dirigé vers la surface de sol à nettoyer est relié de façon rigide à l'élément palpeur agencé sous la forme d'une bague palpeuse (43) entourant le mécanisme de roulement (12), et **en ce que** l'unité de détection comprend des capteurs à effet Hall (24, 25) et des aimants associés à ceux-ci, qui sont fixés sur le mécanisme de déplacement (12), en particulier sur la face intérieure du couvercle qui est dirigée vers le mécanisme dé déplacement (12).
